# EUROPÄISCHE PATENTSCHRIFT

(11) **EP 2 828 598 B1**
(45) Veröffentlichungstag und Bekanntmachung des Hinweises auf die Patenterteilung: **13.03.2019**
(21) Anmeldenummer: 13701620.0
(22) Anmeldetag: 25.01.2013
(51) Int. Cl.: F28D 1/047, F28F 1/16, B21C 37/22

(54) **WÄRMETAUSCHER, VERFAHREN ZU SEINER HERSTELLUNG SOWIE VERSCHIEDENE ANLAGEN MIT EINEM DERARTIGEN WÄRMETAUSCHER**
HEAT EXCHANGER, METHOD FOR PRODUCING SAME AND VARIOUS SYSTEMS HAVING SUCH A HEAT EXCHANGER
ÉCHANGEUR DE CHALEUR, PROCÉDÉ DE PRODUCTION CORRESPONDANT ET DIVERS SYSTÈMES AVEC UN TEL ÉCHANGEUR DE CHALEUR

(30) Priorität: 19.03.2012 DE 102012005513
(43) Veröffentlichungstag der Anmeldung: 28.01.2015
(73) Patentinhaber: Bundy Refrigeration International Holding B.V., 1097 JB Amsterdam (NL)
(72) Erfinder: KIRCHNER, Jörg, 99752 Lipprechterode (DE); VIKLUND, Bengt, S-27456 Abbekås (SE)
(74) Vertreter: Heyer, Volker
(86) Internationale Anmeldenummer: PCT/EP2013/051422
(87) Internationale Veröffentlichungsnummer: WO 2013/139507

(56) Entgegenhaltungen:
- EP-A1- 2 042 825
- DE-B- 1 039 543
- FR-A- 1 115 079
- US-A- 2 322 341
- US-A- 2 444 908
- US-A- 2 578 136
- US-A- 3 111 168
- US-A1- 2010 319 379

## Beschreibung

### 1. Gebiet der Erfindung

Vorliegende Erfindung betrifft einen Wärmetauscher zum Abführen von Wärme aus einem Medium, ein serpentinenförmiges Flügelrohr als ein wesentlicher Bestandteil eines derartigen Wärmetauschers, ein Verfahren zum Herstellen eines derartigen serpentinenförmigen Flügelrohrs sowie ein Verfahren zur Herstellung des oben genannten Wärmetauschers.

### 2. Hintergrund der Erfindung

Wärmetauscher sind im Stand der Technik allgemein bekannt. Sie werden in Kühlsystemen und Klimaanlagen bzw. Klimasystemen eingesetzt, um einem erwärmten Medium Wärme zu entziehen und diese an die Umgebung abzugeben. Aufgrund dieser Funktionalität werden die Wärmetauscher basierend auf der Umwandlung des in ihnen abzukühlenden Mediums auch als Verflüssiger oder Verdampfer bezeichnet.

Derartige Wärmetauscher bestehen gewöhnlich aus mindestens zwei gegenüberliegend angeordneten Seitenwänden, zwischen denen eine aus Rohren bestehende Gitterstruktur angeordnet ist. Diese Rohre bilden einen Durchflusspfad, durch den ein abzukühlendes Medium geleitet werden kann. Die Außenseite der Rohre wird beispielsweise durch einen Luftstrom umspült, der mithilfe eines Gebläses auf die Rohranordnung geleitet wird.

In Abhängigkeit von der Art der Rohranordnung der Rohre, die dem kühlenden Luft- oder Gasstrom ausgesetzt ist, kühlt das in den Rohren geleitete Medium ab. Um den Wärmeentzug durch das umspülende Medium zu vergrößern, wird beispielsweise die umspülte Rohroberfläche vergrößert. Zu diesem Zweck sind die Rohre des Wärmetauschers mit radial abstehenden Flügeln, sogenannten Flügelrohren, ausgestattet, wie sie beispielgebend in WO 2009/068979 offenbart sind. Derartige Flügelrohre bestehen aus wärmeleitfähigen Metallen oder Legierungen davon, wie beispielsweise Stahl, Stahllegierung, Kupfer, Kupferlegierungen, Aluminium und Aluminiumlegierungen. Die Flügelrohre werden entweder durch Walzen oder durch Metall-Extrusion hergestellt.

In dem Wärmetauscher der WO 2009/068979 sind mehrere geradlinige Flügelrohre zwischen zwei gegenüberliegenden Seitenwänden angeordnet. Jeweils im Bereich der Seitenwände sind die geradlinigen Flügelrohre über gebogene Verbindungsstücke miteinander verbunden. Derartige Verbindungsstücke werden einzeln mit den beiden zu verbindenden geradlinigen Flügelrohren verlötet, um eine flüssigkeitsdichte oder gasdichte Verbindung zwischen den beiden geradlinigen Flügelrohren herzustellen. Dieses Herstellungsverfahren des Wärmetauschers ist aufgrund der Vielzahl der Arbeitsschritte arbeitsaufwändig und somit teuer. Des Weiteren sind die geradlinigen Flügelrohre gleichmäßig im Verhältnis zueinander angeordnet, was zu einer Abschattung benachbarter Flügelrohre und somit zu einer reduzierten Effizienz des Wärmetauschers führt. Ein weiterer Nachteil besteht darin, dass bei zu engmaschiger Anordnung der Rohre des Wärmetauschers Verschmutzung auftreten kann, die regelmäßig zu entfernen ist. Dies wird besonders deutlich, wenn Lamellenstrukturen in dem Wärmetauscher eingesetzt werden. Entsprechend ist ein hoher Wartungsaufwand erforderlich, um den Wärmetauscher regelmäßig zu reinigen.

US 2,578,136 beschreibt einen Wärmetauscher mit serpentinenförmigen Flügelrohren, die mehrere geradlinige Flügelabschnitte enthalten. An den Flügelabschnitten sind jeweils an gegenüberliegenden Seiten Flügel vorgesehen, die sich von dem jeweiligen Rohr in Tangentialrichtung, nicht aber in radialer Richtung, erstrecken. Daraus folgt, dass die Flügel nicht einander gegenüberliegend angeordnet sind und sich andere Strömungsverhältnis an den Flügelabschnitten im Vergleich zu Flügelabschnitten mit radialen Flügeln ergeben. Ziel der sich tangential erstreckenden Flügel besteht darin, mit benachbarten Flügelabschnitten Strömungskanäle zu bilden, da sich die tangential erstreckenden Flügel fast berühren. Durch diese spezielle Flügelanordnung wird erreicht, dass ein Luft- oder Gasstrom die Flächen der Flügelabschnitte und der Rohrabschnitte nahezu vollständig überstreicht, um den Wärmeaustausch zu erzielen.

US 2010/0319379 A1 beschreibt einen Wärmetauscher mit mehreren serpentinenförmigen Flügelrohren. Diese Flügelrohre unterteilen sich in mehrere geradlinige Flügelabschnitte, die über flügellose gebogene Rohrabschnitte miteinander verbunden sind. Die geradlinigen Flügelabschnitte eines serpentinenförmigen Flügelrohrs sind in einer gemeinsamen Rohrebene angeordnet. Dies hat den Nachteil, dass aufgrund der geometrischen Ausdehnung der Flügel der geradlinigen Flügelabschnitte nur eine begrenzte Dichte an geradlinigen Flügelabschnitte innerhalb des Wärmetauschers in einem bestimmten Raumbereich angeordnet werden können. Über die begrenzte Anzahl an anordenbaren geradlinigen Flügelabschnitten im Wärmetauscher ist auch die Bereitstellung von zum Wärmeaustausch nutzbaren Flügelflächen der geradlinigen Flügelabschnitte begrenzt.

Es ist daher die Aufgabe vorliegender Erfindung, einen Wärmetauscher mit im Vergleich zum Stand der Technik verbesserter Effizienz, geringem Wartungsaufwand und basierend auf einem vereinfachten Herstellungsverfahren bereitzustellen.

### 3. Zusammenfassung der vorliegenden Erfindung

Vorliegende Erfindung umfasst einen Wärmetauscher zum Abführen von Wärme aus einem Medium, der die Merkmale des Anspruchs 1 aufweist.

Die Konstruktion des erfindungsgemäßen Wärmetauschers basiert auf mindestens zwei in Form einer Schlangenlinie oder Serpentine gebogenen Flügelrohren, durch welche ein abzukühlendes Medium geleitet werden kann. Dieses schlangenlinienförmig gebogene Flügelrohr umfasst geradlinige Flügelabschnitte, die dem umströmenden und kühlenden Medium im späteren Wärmetauscher ausgesetzt sind sowie gebogene flügellose Rohrabschnitte, die zwei benachbarte geradlinige Flügelabschnitte miteinander verbinden. Da das serpentinenförmige Flügelrohr vorzugsweise integral ausgebildet ist, gemäß einer Ausführungsform durch die Extrusion von Aluminium oder einer Aluminiumlegierung, sind auch die geradlinigen Flügelabschnitte und die flügellosen gebogenen Rohrabschnitte integral miteinander verbunden und erfordern keine zusätzlichen Verbindungsverfahren, wie beispielsweise das Hartlöten, während der Herstellung des Wärmetauschers. Des Weiteren sind bevorzugt die geradlinigen Flügelabschnitte des serpentinenförmigen Flügelrohrs in mindestens einer Rohrebene senkrecht zur Strömungsrichtung angeordnet, um eine geordnete Gitterstruktur des Wärmetauschers und damit eine Anströmung einer möglichst großen Oberfläche des Wärmetauschers durch das kühlende Medium zu gewährleisten.

Damit zum Anströmen durch das kühlende Medium eine ausreichend große Oberfläche durch das serpentinenförmige Flügelrohr bereitgestellt wird, sind die Flügel der Flügelabschnitte des serpentinenförmigen Flügelrohrs in einem definierten Winkel bezogen auf die Strömungsrichtung des einströmenden kühlenden Mediums oder in einem definierten Winkel bezogen auf die Normale der Rohrebene, in der die Flügelabschnitte angeordnet sind, ausgerichtet. Dieser definierte Winkel der Flügel der Flügelabschnitte erstreckt sich in einem Bereich von 10° ≤ α ≤ 30°. Mithilfe der Variation des Winkels der Flügel der Flügelabschnitte ist einerseits die Größe der angeströmten Oberfläche des Wärmetauschers einstellbar. Zudem ist es möglich, gleiche oder unterschiedliche Anströmverhältnisse innerhalb des Wärmetauschers bereitzustellen. Aufgrund dieser Variabilität lässt sich beispielsweise eine Abschattung von in Strömungsrichtung nachgelagerten Flügelabschnitten reduzieren, was wiederum die Effizienz des Wärmetauschers verbessert.

Gemäß einer bevorzugten Ausführungsform vorliegender Erfindung sind die Flügelabschnitte des mindestens ersten und zweiten serpentinenförmigen Flügelrohrs des Wärmetauschers in zwei Rohrebenen pro Flügelrohr derart angeordnet, dass benachbarte Flügelabschnitte eines Flügelrohrs in unterschiedlichen Rohrebenen angeordnet sind. Des Weiteren ist es bevorzugt, die Flügel der Flügelabschnitte des zweiten Flügelrohrs in mindestens einer Mehrzahl von parallel zueinander angeordneten zweiten Flügelebenen anzuordnen, die in einem zweiten definierten Winkel bezogen auf die Strömungsrichtung im Bereich von 10° ≤ β ≤ 30° angeordnet sind. In weiterer bevorzugter Ausgestaltung dieser Anordnung liegen der erste oder der zweite oder der erste und der zweite definierte Winkel in einem Bereich von 10° ≤ α, β ≤ 20°, weiter bevorzugt in einem Bereich von 12° ≤ α, β ≤ 18° und noch mehr bevorzugt bei einem Winkel von 15°.

In Abhängigkeit von den oben genannten Winkelbereichen verändert sich die dem anströmenden Medium, beispielsweise Luft, entgegen gestellte Oberfläche in ihrer Größe sowie die Verwirbelung des einströmenden kühlenden Mediums im Wärmetauscher, sodass sich der Entzug von Wärme aus dem in den Flügelrohren geleiteten Medium sukzessive steigert. Es hat sich gezeigt, dass eine gesteigerte Effizienz des Wärmetauschers bei einer Einstellung der Flügel der Flügelabschnitte in einem Winkel von 12-18° und noch besser von 15° in Bezug auf die Strömungsrichtung oder die Normale der Rohrebene erreichbar ist. Allgemein sind bereits zufriedenstellende Wärmetauscher-Ergebnisse in einem Winkelbereich der Flügelabschnitte von 10°-30° erzielbar.

In weiterer Ausgestaltung der oben beschriebenen Ausführungsformen ist es zudem bevorzugt, eine Mehrzahl von Flügeln vorzusehen, die sich in radialer Richtung erstrecken und aus den Flügelebenen heraus gekrümmt ausgebildet sind. Diese bevorzugte Formgebung der Flügel ähnlich einem Flugzeugflügel gesehen im seitlichen Schnitt unterstützt den Wärmeaustausch mit dem an das Flügelrohr strömenden Medium. In diesem Zusammenhang ist es besonders bevorzugt, dass die einander gegenüberliegenden Flügel des Flügelrohrs in entgegengesetzten Richtungen gekrümmt sind. Zur weiteren Unterstützung des Wärmeaustauschs zwischen der Umgebung und dem im Flügelrohr befindlichen Medium ist es zudem bevorzugt, an einer Rohrinnenseite des Flügelrohrs eine Mehrzahl von Vertiefungen vorzusehen, die die Oberfläche der Rohrinnenseite des Flügelrohrs vergrößern. Vorzugsweise verlaufen diese Vertiefungen an der Rohrinnenseite in Längsrichtung des Flügelrohrs, während benachbart zu diesen Vertiefungen angeordnete Stege radial ins Innere des Flügelrohrs ragen. Diese Stege können unterschiedliche Formen aufweisen, wie beispielsweise einen viereckigen oder einen abgerundeten Querschnitt.

Gemäß einer weiteren bevorzugten Ausführungsform des erfindungsgemäßen Wärmetauschers sind die Flügelabschnitte des mindestens ersten und zweiten Flügelrohrs in Strömungsrichtung nebeneinander und/oder versetzt zueinander angeordnet. Zudem werden gemäß einer weiteren Ausführungsform vorliegender Erfindung mindestens drei oder vier serpentinenförmige Flügelrohre verwendet, deren Flügelabschnitte jeweils in mindestens einer Rohrebene pro Flügelrohr angeordnet sind.

Um einen kompakten und leistungsfähigen Wärmetauscher bereitzustellen ist es zudem bevorzugt, die flügellosen gebogenen Abschnitte des serpentinenförmigen Flügelrohrs jeweils an einer Seite der serpentinenförmigen Flügelrohre in einer Mehrzahl von zueinander parallelen Biegeebenen anzuordnen, die in einem Winkel zur Rohrebene des Flügelrohrs verlaufen, der dem Winkel der Flügelebene bezogen auf die Strömungsrichtung entspricht. Dies ist gerade dann von Vorteil, wenn die serpentinenförmigen Flügelrohre gemäß einer weiteren bevorzugten Ausführungsform vorliegender Erfindung integrale, vorzugsweise extrudierte, Flügelrohre bevorzugte aus Aluminium oder einer Aluminiumlegierung sind. Basierend auf der oben beschriebenen Form der Flügelrohre bestehend aus Flügelabschnitt und flügellosen gebogenen Abschnitten ist es dann möglich, die flügellosen gebogenen Abschnitte in dafür vorgesehene Langlöcher in den Seitenwänden des Wärmetauschers einzusetzen und dort zu halten. Weitere Befestigungsverfahren oder Verbindungsverfahren zwischen den gebogenen Abschnitten und den Flügelabschnitten sind daher zunächst nicht erforderlich, wenn die serpentinenförmigen Flügelrohre als integrale Flügelrohre realisiert sind.

Es wird zudem ein serpentinenförmiges Flügelrohr für den oben beschriebenen Wärmetauscher zum Abführen von Wärme aus einem in dem serpentinenförmigen Flügelrohr geleiteten Medium beschrieben. Dieses serpentinenförmige Flügelrohr umfasst die folgenden Merkmale: ein Rohr und mindestens zwei sich radial davon, vorzugsweise gegenüberliegend, erstreckende Flügel, wobei das Flügelrohr mindestens drei geradlinige Flügelabschnitte verbunden über flügellose gebogene Rohrabschnitte aufweist, die Flügelabschnitte des serpentinenförmigen Flügelrohrs sind in mindestens einer Rohrebene angeordnet, wobei die Flügel der Flügelabschnitte in mindestens einer Mehrzahl von parallel zueinander angeordneten ersten Flügelebenen angeordnet sind, die in einem definierten Winkel bezogen auf eine Normale der ersten Rohrebene im Bereich von 10° ≤ α ≤ 30° angeordnet sind. Die bevorzugten konstruktiven Eigenschaften des serpentinenförmigen Flügelrohrs wurden bereits oben in Verbindung mit dem erfindungsgemäß bevorzugten Wärmetauscher diskutiert.

Zudem ist ein Verfahren zum Herstellen eines serpentinenförmigen Flügelrohrs beschrieben, das die folgenden Schritte umfasst: Bereitstellen eines geradlinigen Flügelrohrs bestehend aus einem Rohr und mindestens zwei sich radial davon, vorzugsweise gegenüberliegend, erstreckenden Flügeln, entfernen der Flügel in bestimmten Teilbereichen, sodass geradlinige flügellose Rohrabschnitte angrenzend an Flügelabschnitte entstehen, Biegen der flügellosen Rohrabschnitte in einer 180°-Krümmung, sodass die Flügelabschnitte in einer Ebene liegen und die Flügel der Flügelabschnitte annähernd senkrecht zu dieser Ebene orientiert sind, und Verdrehen von aneinander angrenzenden U-förmigen Abschnitten jeweils bestehend aus zwei benachbarten Flügelabschnitten verbunden durch einen gebogenen flügellosen Rohrabschnitt gegeneinander derart, dass zumindest jeweils ein erster Flügelabschnitt des U-förmigen Abschnitts in einer ersten Rohrebene angeordnet ist und die Flügel der Flügelabschnitte in mindestens einer Mehrzahl von parallel zueinander angeordneten Flügelebenen angeordnet sind, die in einem definierten Winkel bezogen auf eine Normale der ersten Rohrebene im Bereich von 10° ≤ α ≤ 30° angeordnet sind.

Erfindungsgemäß werden die serpentinenförmigen Flügelrohre, die das Kernstück des Wärmetauschers bilden, aus einem einteiligen Flügelrohr hergestellt. Die geradlinigen Flügelabschnitte liegen beispielsweise schon nach dem Extrudieren des Flügelrohrs aus Aluminium oder einer Aluminiumlegierung gemäß einer bevorzugten Ausführungsform vorliegender Erfindung vor. Die späteren gebogenen flügellosen Rohrabschnitte werden durch Entfernen der Flügel von dem vorliegenden Flügelrohr erzeugt. Zum Bereitstellen einer übersichtlichen Ordnung und strukturierten Anordnung der Flügelabschnitte im späteren Wärmetauscher werden benachbarte Flügelabschnitte jeweils paarweise in U-förmigen Abschnitten angeordnet. Dabei sind die paarweisen Flügelabschnitte über die flügellosen Rohrabschnitte und deren entsprechende Biegung miteinander verbunden. Um nun ein serpentinenförmiges Rohr mit einer Ausrichtung der Flügel in einem bestimmten Winkel zur späteren Strömungsrichtung des kühlenden Mediums herzustellen, werden die U-förmigen Abschnitte aus einer gemeinsamen Ebene des serpentinenförmigen Flügelrohrs derart gegeneinander verdreht, dass die Flügel der Flügelabschnitte in Bezug auf die spätere Strömungsrichtung in einem Winkel von 10° ≤ α ≤ 30° angeordnet sind. Es ist bevorzugt, die U-förmigen Abschnitte des serpentinenförmigen Flügelrohrs derart gegeneinander zu verdrehen, dass die benachbarten Flügelabschnitte eines U-förmigen Abschnitts in einer ersten und einer zweiten Rohrebene angeordnet sind. Jeweils bezogen auf die Normale der Rohrebene oder die Strömungsrichtung des später einströmenden kühlenden Mediums sind die Flügel der Flügelabschnitte der ersten und zweiten Rohrebene in einem Winkelbereich von 10° ≤ α ≤ 30° angeordnet. Da dieser Winkel jeweils den kleinsten Drehwinkel zwischen Flügel und Normale der Rohrebene oder Strömungsrichtung betrifft, können die Flügel in einem mathematischen Winkelbereich von 10° ≤ α ≤ 30° und -30° ≤ α ≤ -10° um die Strömungsrichtung oder die Normale der Rohrebene angeordnet sein, der im Weiteren aber vorzeichenunabhängig als Winkel im Bereich von 10°-30° diskutiert wird. Dieses Verständnis gilt auch für die übrigen im Folgenden diskutierten Winkel.

Vorliegende Erfindung umfasst zudem ein Verfahren gemäß Patentanspruch 14 zur Herstellung des oben beschriebenen Wärmetauschers, das die folgenden Schritte aufweist: Bereitstellen eines Gehäuses bestehend aus mindestens zwei einander gegenüberliegenden Seitenwänden mit einer Mehrzahl von, vorzugsweise parallel zueinander angeordneten, Langlöchern, Einsetzen mindestens eines serpentinenförmigen Flügelrohrs in die Mehrzahl von Langlöchern der gegenüberliegenden Seitenwände derart, dass eine Mehrzahl von gebogenen flügellosen Rohrabschnitten in die Mehrzahl von Langlöchern eingreift, und anschließend von jeweils einer Verbindungsleitung an die offenen Enden des serpentinenförmigen Flügelrohrs. Gemäß
eines weiteren bevorzugten Verfahrensschritts werden drei, vier oder mehr serpentinenförmige Flügelrohre in die Mehrzahl von Langlöchern eingesetzt und es werden die serpentinenförmigen Flügelrohre miteinander verbunden. Vorzugsweise wird in dem Herstellungsverfahren das Flügelrohr mit Vertiefungen an der Rohrinnenseite und/oder mit gekrümmten Flügeln bereitgestellt, wie sie oben bereits erläutert worden sind.

Vorliegende Erfindung umfasst zudem eine Klimaanlage, eine Kühlanlage sowie eine Solarthermieanlage mit einem Wärmetauscher, wie er oben beschrieben worden ist. Eine weitere Anwendung vorliegender Erfindung besteht in einem Trockner mit einem Wärmetauscher, wie er oben beschrieben worden ist. Vorzugsweise wird in einem solchen Trockner der Wärmetauscher in Kombination mit einem Wärmepumpensystem eingesetzt. Ganz allgemein ist somit vorliegende Erfindung auf die Verwendung des erfindungsgemäß bevorzugten Wärmetauschers als Verflüssiger und/oder Verdampfer in unterschiedlichsten Geräten gerichtet.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Ansicht eines erfindungsgemäß bevorzugten Wärmetauschers,
- Figur 2: eine Seitenansicht des Wärmetauschers aus Figur 1,
- Figur 3: eine weitere bevorzugte Ausführungsform des erfindungsgemäßen Wärmetauschers,
- Figur 4: eine Seitenansicht des Wärmetauschers aus Figur 3,
- Figur 5: eine vergrößerte Darstellung des eingekreisten Bereichs aus Figur 4,
- Figur 6: eine Draufsicht auf eine bevorzugte Ausführungsform eines serpentinenförmigen Flügelrohrs,
- Figur 7: eine Seitenansicht des serpentinenförmigen Flügelrohrs aus Figur 6,
- Figur 8: eine vergrößerte Darstellung des eingekreisten Bereichs aus Figur 7,
- Figur 9: eine weitere bevorzugte Ausführungsform eines serpentinenförmigen Flügelrohrs,
- Figur 10: eine Seitenansicht des serpentinenförmigen Flügelrohrs aus Figur 9,
- Figur 11: eine vergrößerte Darstellung des eingekreisten Bereichs aus Figur 10,
- Figur 12: eine bevorzugte Ausführungsform eines serpentinenförmigen Flügelrohrs mit den Flügelabschnitten in nur einer Rohrebene,
- Figur 13: eine bevorzugte Ausführungsform eines serpentinenförmigen Flügelrohrs mit den Flügelabschnitten in einer ersten und einer zweiten Rohrebene,
- Figur 14: Installationssequenzen gemäß einem bevorzugten Verfahren zur Herstellung des Wärmetauschers,
- Figur 15: eine bevorzugter Zusammenhang zwischen der Energieabgabe des Wärmetauschers in Abhängigkeit von der Winkelorientierung der Flügel des serpentinenförmigen Flügelrohrs,
- Figur 16: eine bevorzugte normierte Energieabfuhr von Wärmetauschern unterschiedlicher Konstruktion in Abhängigkeit vom Winkel der Flügel zur Strömungsrichtung, wenn die Anordnung der Flügelabschnitte in Bezug zueinandder verändert wird,
- Figur 17: eine vergrößerte Darstellung eines bevorzugten Flügelrohrs mit Flügelabschnitten und einem flügellosen Rohrabschnitt,
- Figur 18: ein Flussdiagramm eines bevorzugten Herstellungsverfahrens eines serpentinenförmigen Flügelrohrs,
- Figur 19: ein Flussdiagramm eines bevorzugten Herstellungsverfahrens eines Wärmetauschers,
- Figur 20: Querschnittsdarstellung einer bevorzugten Ausführungsform eines erfindungsgemäßen Flügelrohrs und
- Figur 21: schematische Schnittdarstellung eines Wärmetauschers mit bevorzugten Flügelrohren, die gekrümmte Flügel aufweisen.

### 5. Detaillierte Beschreibung der bevorzugten Ausführungsformen

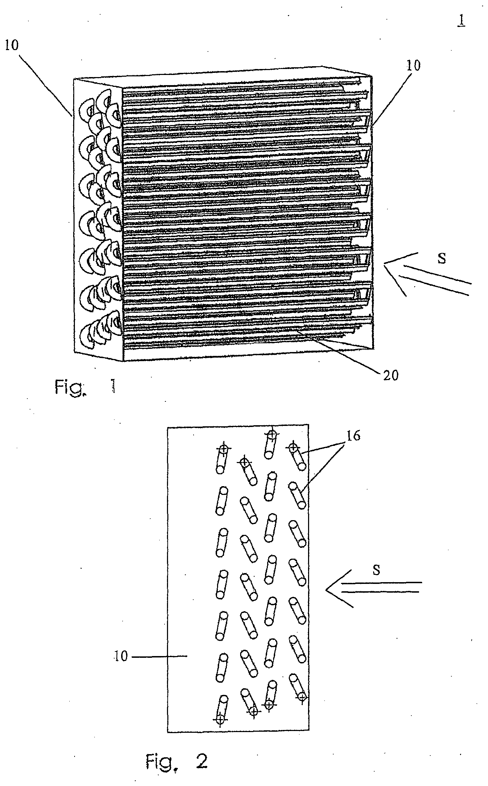

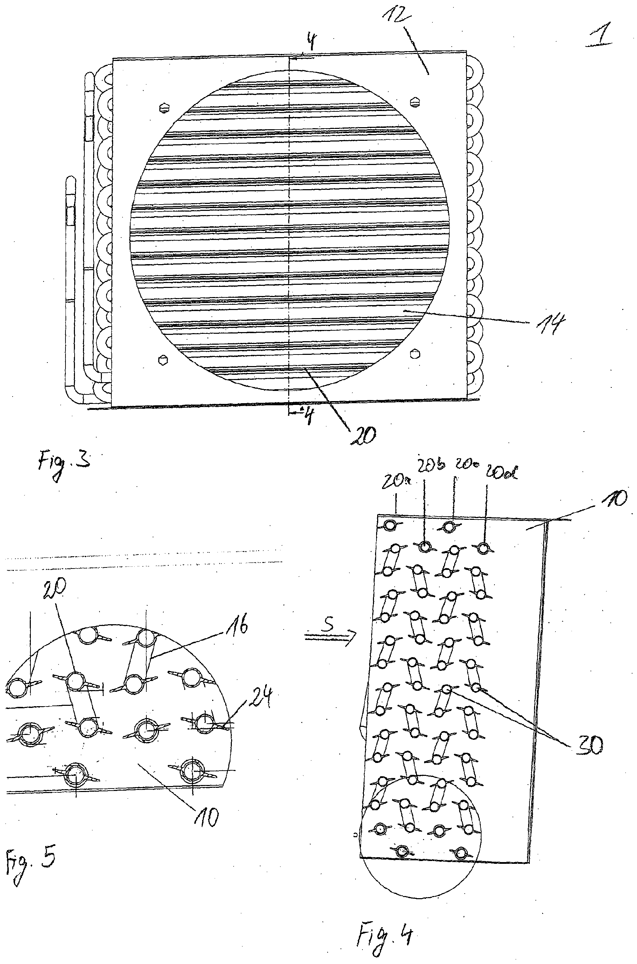

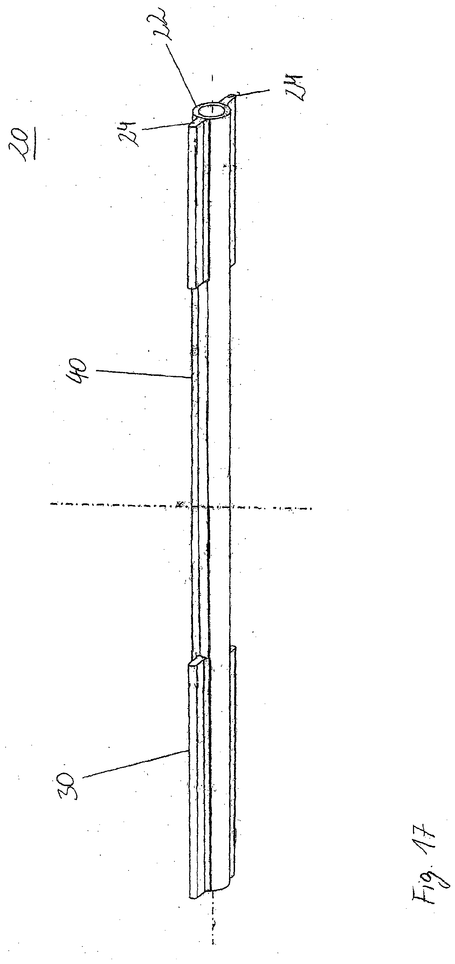

In den Figuren 1 und 3 sind bevorzugte Ausführungsformen eines erfindungsgemäßen Wärmetauschers 1 gezeigt. Der Wärmetauscher 1 umfasst ein Gehäuse mit mindestens zwei einander gegenüberliegend angeordneten Seitenwänden 10. Bevorzugte weist das Gehäuse vier als Rechteck angeordnete Seitenwände 10 sowie eine Frontplatte 12 auf, die eine Einlass- oder Auslassöffnung 14 definiert. Gegenüber der Einlass- oder Auslassöffnung 14 ist das Gehäuse offen oder es weist eine weitere Öffnung (nicht gezeigt) auf. Basierend auf dieser Konstruktion kann Luft oder ein anderes kühlendes gasförmiges Medium durch das Gehäuse in einer Strömungsrichtung S (vgl. Figur 1) geleitet werden. Die Seitenwände 10 bestehen gemäß einer Ausführungsform aus Blech mit einer lackierten oder anderweitig korrosionsbeständig beschichteten Oberfläche. Auf diese Weise hält das Gehäuse den thermischen Belastungen sowie den Belastungen durch Feuchtigkeit stand. Wenn beschichtete oder lackierte Bleche zur Herstellung des Gehäuses verwendet werden, dann werden diese vorzugsweise mittels Clinchen oder Nieten mit einander verbunden, um die Bleche bzw. die darauf befindliche Schutzschicht oder Oberflächenvergütung nicht zu beschädigen. Es ist natürlich ebenfalls bevorzugt, das Gehäuse aus Kunststoff herzustellen, solange die Anforderungen an Stabilität und Lebensdauer des Gehäuses erfüllt sind.
Gewöhnlich wird Luft in Strömungsrichtung S durch das Gehäuse geleitet. Dazu wird sie mit einem entsprechenden Gebläse (nicht gezeigt), das vorzugsweise an der Rückseite des Wärmetauschers 1 angeordnet ist, in Strömungsrichtung S bewegt, beispielsweise gesaugt. Es ist ebenfalls denkbar, die Luft mittels Gebläse durch den Wärmetauscher 1 zu blasen.
Der Wärmetauscher 1 umfasst eine Mehrzahl von Flügelrohren 20, die innerhalb des Gehäuses des Wärmetauschers angeordnet sind. Die Flügelrohre 20 erstrecken sich quer zur Strömungsrichtung S und sind in regelmäßigen Abständen in einer gitterähnlichen Struktur angeordnet. Beispielgebend zeigt Figur 17 eine bevorzugte Ausführungsform eines Flügelrohrs 20 bestehend aus einem Rohr 22 und sich radial davon erstreckenden Flügeln 24. Vorzugsweise sind die Flügel 24 einander gegenüberliegend angeordnet und geradlinig ausgebildet. Es ist ebenfalls denkbar, die Flügel 24 in einer gewellten oder durchbrochenen Struktur vorzusehen oder mehr als zwei radiale Flügel 24 am Rohr 22 umfänglich verteilt anzuordnen.
Gemäß einer bevorzugten Ausführungsform besteht das Flügelrohr 20 aus extrudiertem Aluminium oder einer Aluminiumlegierung. Das Flügelrohr 20 kann ebenfalls auf andere Weise als durch Extrudieren hergestellt werden, wie beispielsweise durch Walzen. Zudem sind für derartige Flügelrohre 20 alle wärmeleitfähigen Stoffe geeignet, mit denen sich ein Flügelrohr 20 herstellen lässt.
Das Flügelrohr 20 ist innen hohl, sodass ein Medium, beispielsweise Flüssigkeiten oder Gase, durch das Flügelrohr 20 geleitet werden können. Strömt beispielsweise Luft in Strömungsrichtung S durch den Wärmetauscher 1 und somit an dem Flügelrohr 20 vorbei, wird durch den Luftstrom dem im Flügelrohr 20 geleiteten Medium Wärme entzogen und an die Umwelt abgeführt. Die Flügel 24 des Flügelrohrs 20 stellen dabei eine große Oberfläche bereit, sodass die vorbeiströmende Luft dem Medium im Flügelrohr 20 Wärme entziehen kann, sofern die Lufttemperatur geringer ist als die Temperatur des Mediums im Flügelrohr 20. (vgl. Fig. 17)

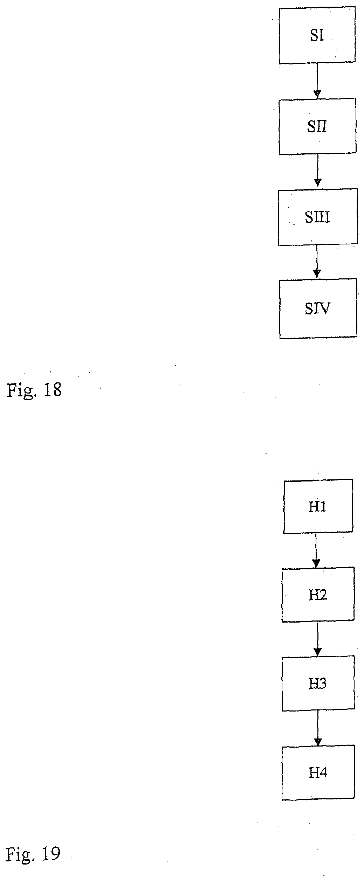

Vorzugsweise wird das Flügelrohr 20 aus Aluminium, einer Aluminiumlegierung oder einem anderen wärmeleitfähigen Material, vorzugsweise Metall, hergestellt (vgl. Fig. 18). Gemäß einer bevorzugten Ausführungsform zur Herstellung derartiger Flügelrohre wird das Flügelrohr 20 extrudiert (SI). Das Rohr 22 umfasst gemäß einer Ausführungsform einen Außendurchmesser von ungefähr 8 mm und eine Wandstärke von ca. 0,7 mm. Die Flügel 24 erstrecken sich in radialer Richtung gegenüberliegend voneinander über jeweils 7 mm. Somit hat das Flügelrohr 20 mit Flügeln 24 eine Gesamtbreite von ca. 22 mm. Gemäß weiterer bevorzugter Ausführungsformen vorliegender Erfindung werden andere als die oben beschriebenen Materialien und Dimensionen zur Herstellung des Flügelrohrs 20 verwendet, sofern sie den Anforderungen des Wärmetauschers 1 entsprechen.

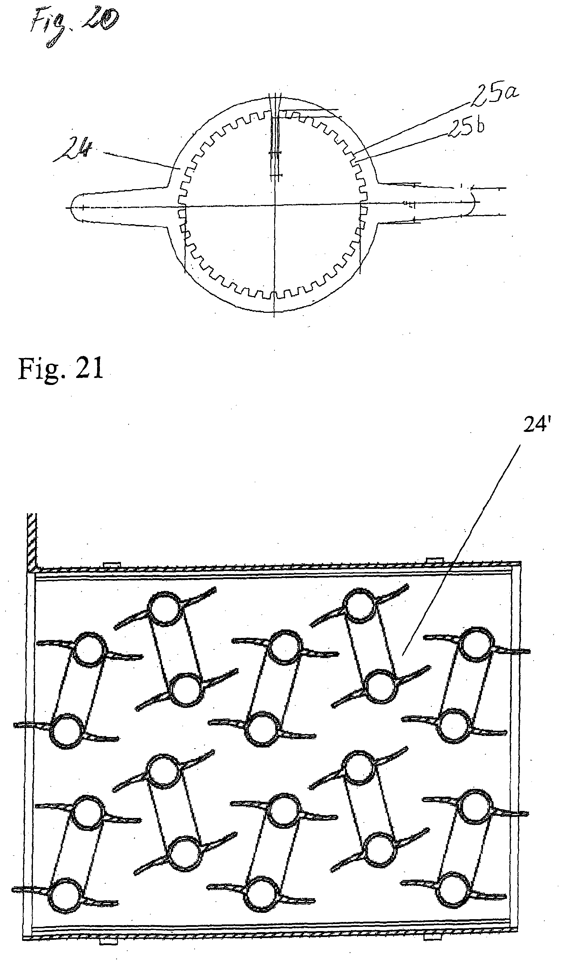

Um den Wärmeaustausch zwischen der Umgebung und dem Medium im Flügelrohr 24 zu unterstützen, wird vorzugsweise eine Oberfläche der Rohrinnenseite des Flügelrohrs 24 vergrößert. Zu diesem Zweck wird eine Mehrzahl von Vertiefungen 25a in die Rohrinnenseite eingebracht, die sich gemäß einer in Figur 20 gezeigten bevorzugten Ausführungsform in radialer Richtung erstrecken. Benachbart zu den Vertiefungen 25a ragen vorzugsweise Stege 25b radial einwärts in das Innere des Flügelrohrs 24. Diese Stege 25b sowie die Vertiefungen 25a weisen vorzugsweise unterschiedliche Querschnittsformen auf, die beispielsweise durch das Herstellungsverfahren oder die zu erreichende Größe der Oberfläche der Rohrinnenseite bestimmt sind. Daher ist es denkbar, dass die Vertiefungen 25a und/oder die Stege 25b mit einer rechteckigen, dreieckigen, mehr-eckigen oder abgerundeten Querschnittsgestalt auszubilden.

Nachdem das Flügelrohr 20 als ein zusammenhängender Teil hergestellt worden ist (SI), werden in bestimmten Teilbereichen in Längsrichtung des Flügelrohrs 20 die Flügel 24 entfernt (SII). Dadurch entstehen Flügelabschnitte 30 und flügellose Rohrabschnitte 40, wie es in Fig. 17 gezeigt ist. Wie man anhand der Fig. 1 und 3 erkennen kann, sind im Wärmetauscher 1 die Flügelabschnitte 30 im Wesentlichen zwischen den Seitenwänden 10 angeordnet und werden in Strömungsrichtung S umströmt. Die flügellosen Rohrabschnitte 40 sind gebogen ausgebildet und im Bereich der Seitenwände 10 angeordnet, um das Flügelrohr 20 innerhalb des Gehäuses des Wärmetauschers 1 zu halten.

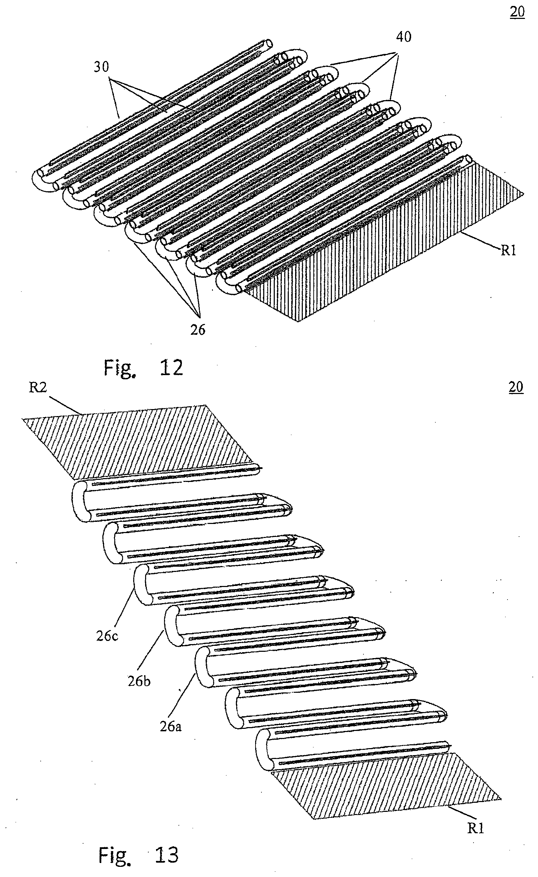

Nachdem das Flügelrohr 20 hergestellt und die Flügel 24 in Teilbereichen entfernt worden sind, liegt ein geradliniges Flügelrohr 20 bestehend aus geradlinigen Flügelabschnitte 30 und geradlinigen flügellosen Rohrabschnitten 40 vor. Nachfolgend werden die flügellosen Rohrabschnitte 40 um 180° gebogen, sodass ein serpentinenförmiges Flügelrohr 20 vorliegt. Innerhalb des serpentinenförmigen Flügelrohrs 20 ergeben sich U-förmige Abschnitte 26 mit jeweils zwei zueinander benachbarten Flügelabschnitten 30, die über einen gebogenen flügellosen Rohrabschnitt 40 miteinander verbunden sind (vgl. Fig. 12). Das serpentinenförmige Flügelrohr 20 ist vorzugsweise derart gebogen (SIII), dass die Flügelabschnitte 30 in einer gemeinsamen Rohrebene R1 liegen und die Flügel 24 quer zu dieser Rohrebene R1 orientiert sind.

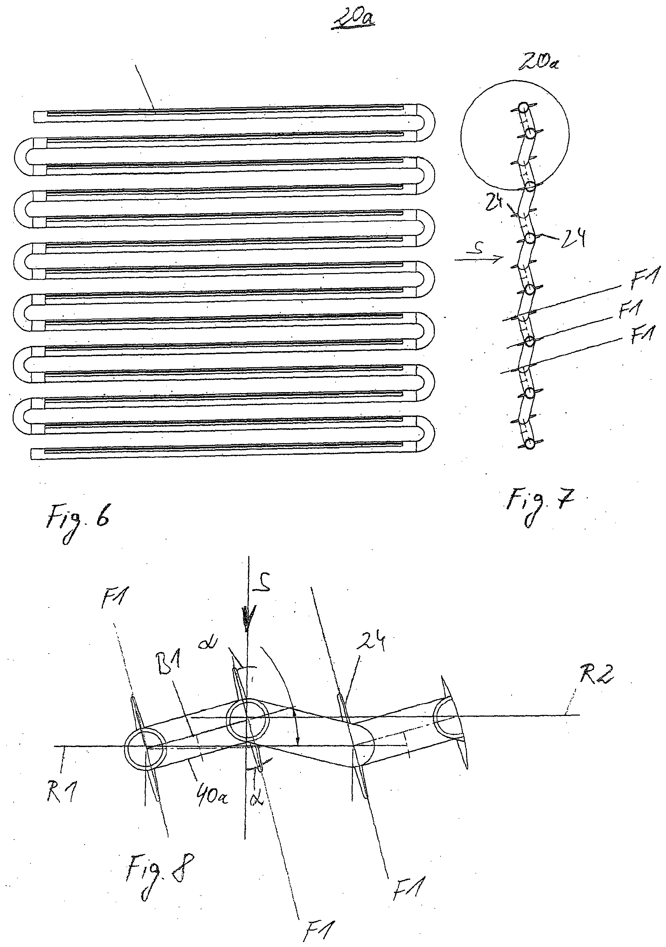

Nachfolgend werden zueinander benachbarte U-förmige Abschnitte 26a, 26b, 26c derart verdreht (SIV), dass ein Teil der parallel zueinander verlaufenden Rohrabschnitte 30 außerhalb der Rohrebene R1 liegen (vgl. Fig. 7, 8, 10, 11, 13). Gemäß einer bevorzugten Ausführungsform, die in Fig. 13 gezeigt ist, werden die U-förmigen Abschnitten 26a, 26b, 26c derart um ihre längsverlaufende Mittelachse gedreht, dass die U-förmigen Abschnitte 26a, 26b, 26c danach parallel zueinander ausgerichtet sind. In einer bevorzugten Ausführungsform dieser parallelen Anordnung der U-förmigen Abschnitte 26a-26c befindet sich jeweils ein Rohrabschnitt 30 eines U-förmigen Abschnitts 26a in Rohrebene R1 und der andere Rohrabschnitt 30 des U-förmigen Abschnitts 26a in Rohrebene R2. Es ist ebenfalls bevorzugt, die U-förmigen Abschnitte 26a-26c derart zu verdrehen, dass die Rohrabschnitte 30 in weiteren Rohrebenen (nicht gezeigt) angeordnet sind. Nach Einbau des serpentinenförmigen Flügelrohrs 20 im Gehäuse des Wärmetauschers 1 sind die Rohrebenen R1 und R2 und somit die Rohrabschnitte 30 vorzugsweise senkrecht zur Strömungsrichtung S angeordnet, wie es beispielsweise anhand von Fig. 1 zu erkennen ist.

Vorzugsweise ist in einem Wärmetauscher 1 mindestens ein serpentinenförmiges Flügelrohr 20 angeordnet. Gemäß weiterer bevorzugter Ausführungsformen werden zwei, drei, vier oder mehr serpentinenförmige Flügelrohre 20a, 20b, 20c, 20d im Gehäuse des Wärmetauschers 1 installiert, wie es in den Fig. 1, 2, 4, 14 erkennbar ist.

Während die sich quer zur Strömungsrichtung S erstreckenden Flügelabschnitte 30 zwischen den Seitenwänden 10 angeordnet sind, werden die flügellosen gebogenen Rohrabschnitte 40 in jeweils einem Langloch 16 (vg. Fig. 2) positioniert und gehalten. Die Langlöcher 16 sind entsprechend der Größe der flügellosen gebogenen Rohrabschnitte 40 und deren Neigung im Vergleich zu einer der Rohrebenen R1, R2 ausgebildet. Um das mindestens eine serpentinenförmige Flügelrohr 20 im Wärmetauscher 1 zu halten, werden die flügellosen gebogenen Rohrabschnitte 40 in beiden gegenüberliegenden Seitenwänden 10 in den dafür vorgesehenen Langlöchern 16 eingesetzt und gehalten (SIV). Da diese Seitenwände 10 in einem definierten Abstand zueinander im Wärmetauscher 1 fixiert sind, können sich die serpentinenförmigen Flügelrohre 20 nicht aus den Langlöchern 16 lösen und sind auf einfach Weise dauerhaft befestigt.

Wie man anhand von Figur 4 erkennen kann, die einen Schnitt entlang der Linie 4-4 in Fig. 3 wiedergibt, sind vier serpentinenförmige Flügelrohre 20 im Wärmetauscher 1 installiert. Die Flügelabschnitte 30 jedes serpentinenförmigen Flügelrohrs 20 sind jeweils in zwei Rohrebenen R1, R2 angeordnet. Zudem sind die in Strömungsrichtung S gesehen benachbarten Flügelabschnitte 30 unterschiedlicher serpentinenförmiger Flügelrohre 20 nebeneinander angeordnet. Es ist ebenfalls bevorzugt, die Flügelabschnitte 30 versetzt zueinander anzuordnen, um ihre Umströmung zu verändern (nicht gezeigt).

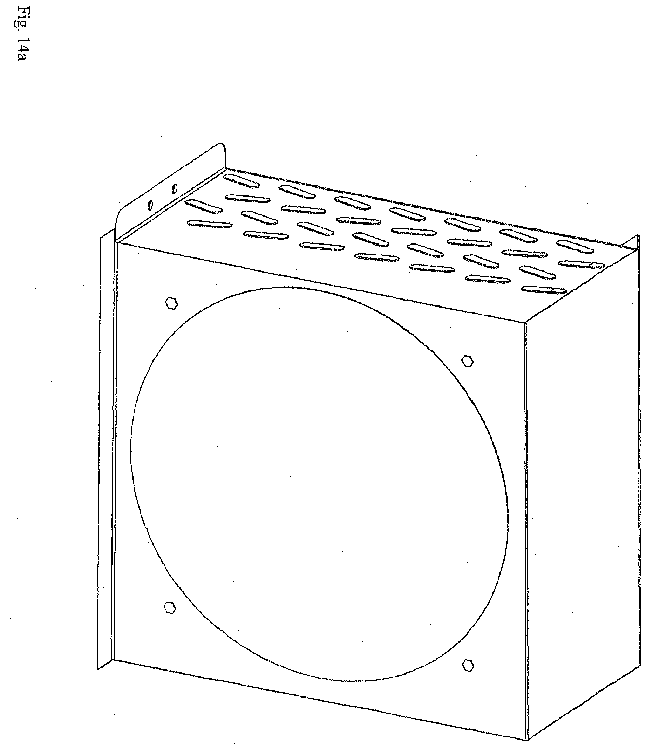

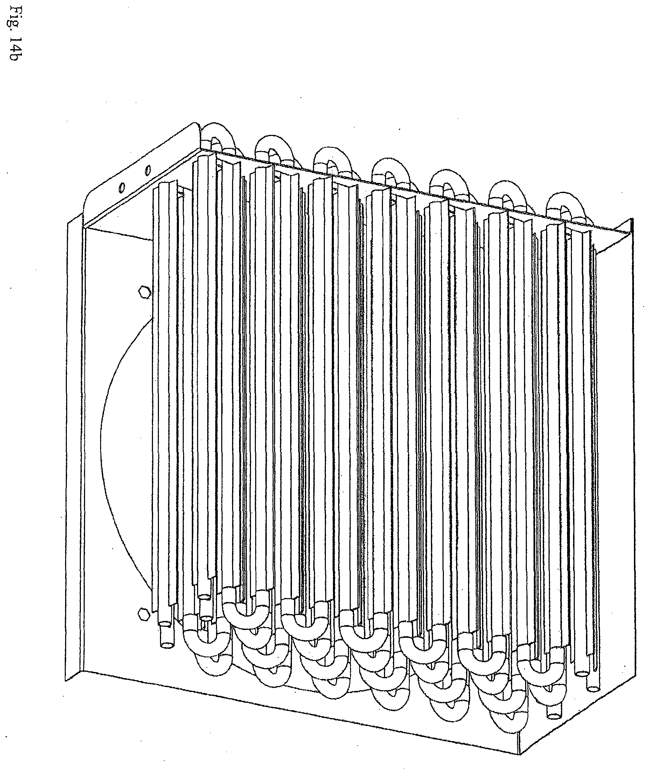

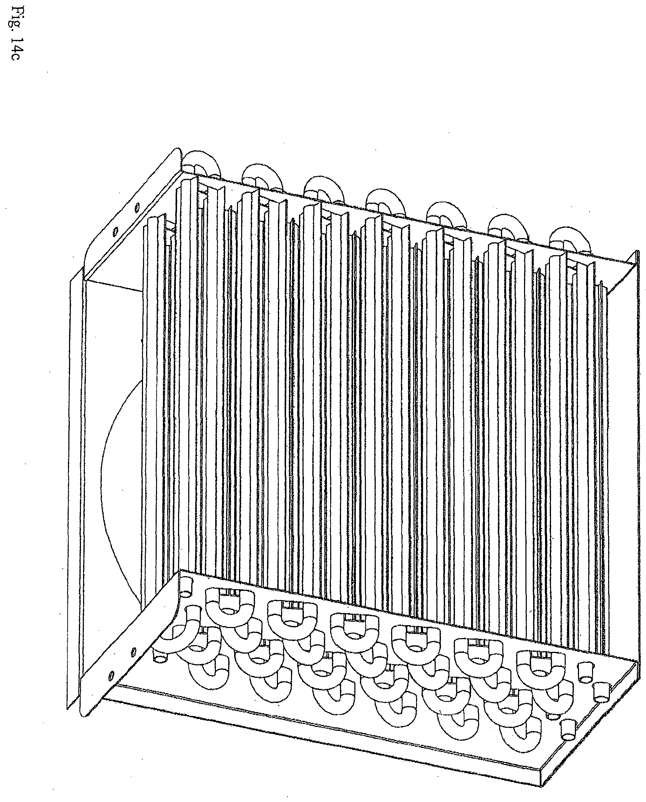

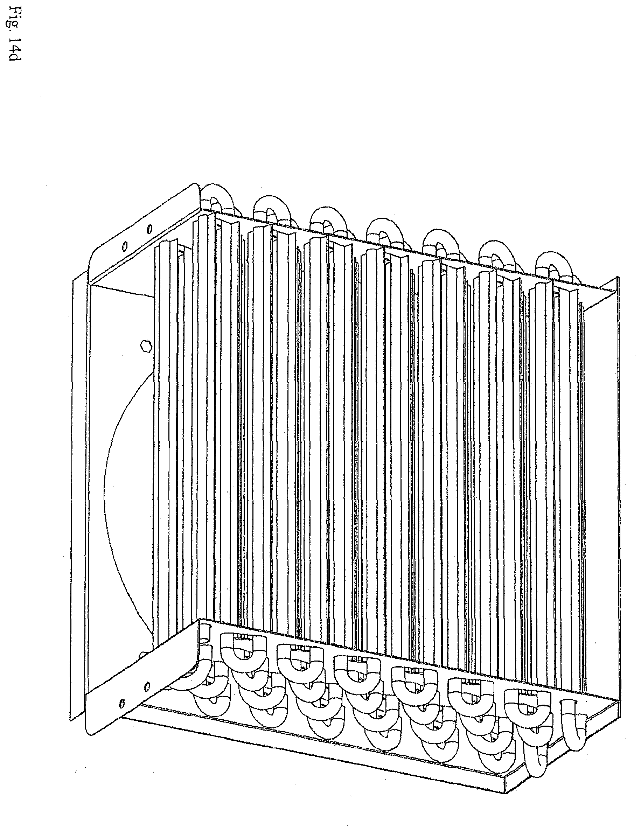

Nachdem das Gehäuse bestehend aus den mindestens zwei Seitenwänden 10 bereitgestellt worden ist (Schritt H1), werden die serpentinenförmigen Flügelrohre 20 in die Langlöcher 16 der Seitenwände 10 eingesetzt (Schritt H2). Anschließend werden die Seitenwände 10 über mindestens eine weitere Gehäusewand, beispielsweise die Frontplatte 12, aneinander befestigt oder auf einer Grundplatte montiert. Dadurch wird sichergestellt, dass die Seitenwände 10 in einem definierten Abstand zueinander festgelegt sind, sodass die serpentinenförmigen Flügelrohre 20 nicht aus den Langlöchern 16 herausfallen können (vgl. Fig. 14). Danach werden benachbarte serpentinenförmige Flügelrohre 20 miteinander verbunden, um einen durchgehenden Strömungsweg des abzukühlenden Mediums durch alle im Wärmetauscher 1 verbauten serpentinenförmigen Flügelrohre 20 bereitzustellen (Schritt H3). (vgl. Fig. 19)

Nachfolgend werden Anschlussrohre mit dem Eingang und dem Ausgang der miteinander verbundenen serpentinenförmigen Flügelrohre 20 verbunden, vorzugsweise gelötet, um den Wärmetauscher 1 in eine Kühlanlage, eine Klimaanlage oder eine Solarthermieanlage integrieren zu können (Schritt H4). Gemäß einer bevorzugten Ausführungsform vorliegender Erfindung wird der Wärmetauscher 1 mit einem eigenen Gebläse (nicht gezeigt) ausgestattet, mit dem beispielsweise kühlende Luft über die Flügelabschnitte 30 geleitet, das heißt gesaugt oder geblasen, wird (vgl. Fig. 8).

Wie man anhand von Fig. 12 erkennen kann, sind die Flügel 24 senkrecht zur Rohrebene R1 ausgerichtet. Nachdem die U-förmigen Abschnitte 26a-26c um ihre mittlere Längsachse verdreht worden sind, sind die Flügel in einer Mehrzahl von Flügelebenen F angeordnet. Gemäß einer bevorzugten Ausführungsform, die in den Fig. 6-8 veranschaulicht ist, liegen die Flügel 24 eines serpentinenförmigen Flügelrohrs 20 in einer Schar oder Mehrzahl von parallel zueinander angeordneten Flügelebenen F1. Die Flügelebenen F1 und somit auch die Flügel 24 schließen mit der Strömungsrichtung S einen Winkel α gemäß Fig. 8 ein, die eine vergrößerte Darstellung des eingekreisten Bereichs aus Fig. 7 zeigt. In Abhängigkeit von der Größe des Winkels a wird eine unterschiedlich große Fläche des Flügelabschnitts 30 durch das kühlende Medium angeströmt. Die angeströmte Fläche verändert sich in einer idealisierten Betrachtung in Abhängigkeit vom Kosinus des Winkels a, das heißt die angeströmte Fläche ist minimal bei einem Winkel von α=0° und sie ist maximal bei einem Winkel von a=90° zur Strömungsrichtung S.

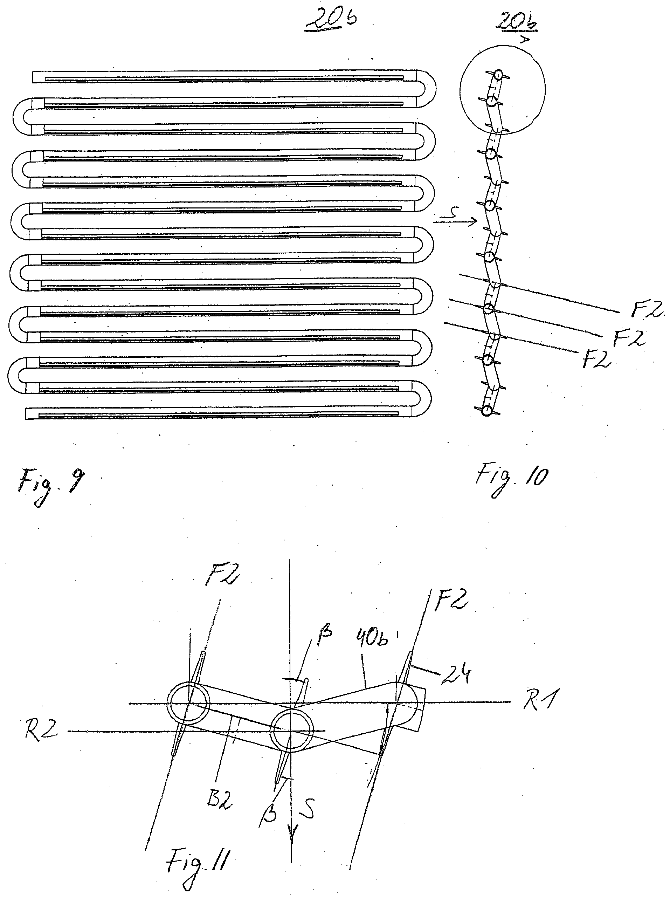

Ein weiteres im Wärmetauscher 1 angeordnetes serpentinenförmiges Flügelrohr 20b zeigen die Fig. 9-11. Basierend auf der Verdrehung der U-förmigen Abschnitte 26 (siehe oben) sind die Flügel 24 in den Flügelebenen F2 angeordnet. Es ist bevorzugt, dass die Flügelebenen F2 des serpentinenförmigen Flügelrohrs 20b parallel zueinander angeordnet sind. Gemäß einer weiteren bevorzugten Ausführungsform liegen die Flügel 24 in nicht parallel zueinander angeordneten Flügelebenen F.

Wie Fig. 11 verdeutlicht, schließen die Flügelebenen F2 und somit die Flügel 24 des serpentinenförmigen Flügelrohrs 20b mit der Strömungsrichtung S einen Winkel β ein. Gemäß unterschiedlichen bevorzugten Ausführungsformen ist der Winkel β genauso groß wie der Winkel α des benachbarten serpentinenförmigen Flügelrohrs 20a. Es ist ebenfalls bevorzugt, die Flügel 20 benachbarter oder allgemein im Wärmetauscher 1 eingesetzter serpentinenförmiger Flügelrohre 20a-20d im gleichen oder in verschiedenen Winkeln auszurichten, um auf diese Weise das Umströmen der Flügelrohre 20 und somit die Effizienz der Wärmeabfuhr des Wärmetauschers 1 gezielt zu beeinflussen.

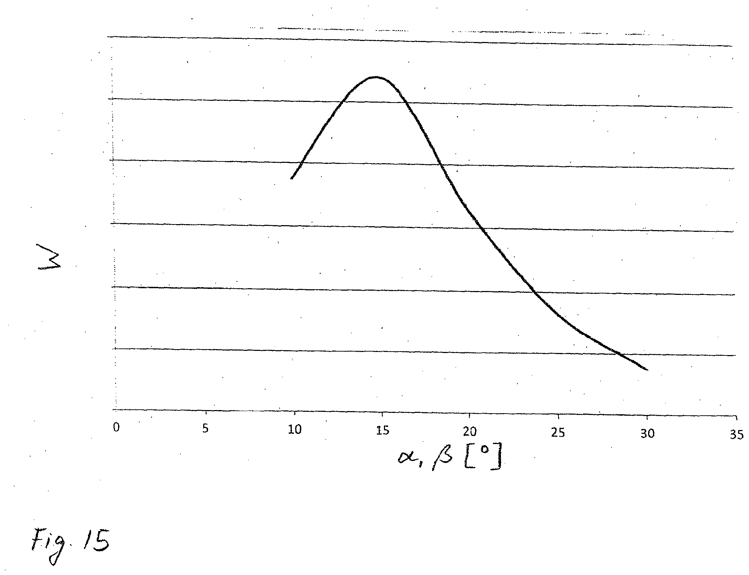

Fig. 15 zeigt einen qualitativen Zusammenhang zwischen dem Einstellwinkel α, β der Flügel 24 bezogen auf die Strömungsrichtung S und der vom Wärmetauscher 1 abgegebenen Wärme W. Dieser Zusammenhang wurde mit einem Wärmetauscher 1 bestimmt, der vier serpentinenförmige Flügelrohre 20 umfasst. Die Flügelabschnitte 30 unterschiedlicher serpentinenförmiger Flügelrohre 20a, 20b, 20c, 20d sind vorzugsweise in Strömungsrichtung S hintereinander angeordnet (siehe Fig. 4). Gemäß einer weiteren bevorzugten Ausführungsform haben die näher benachbarten Flügelabschnitte 30 unterschiedlicher serpentinenförmiger Flügelrohre 20a, 20b, 20c, 20d einen Versatz von 2 mm senkrecht zur Strömungsrichtung S zueinander ähnlich der Anordnung in Fig. 4.

Man kann erkennen, dass die Wärmeabfuhr beginnend bei einem Winkel von 10° stetig zunimmt und bei 15° ein Maximum erreicht. Für Winkel >15° sinkt die Wärmeabfuhr wieder, bis sie bei ca. 18° den Wert erreicht, der einem Einstellwinkel zwischen Flügel 24 und Strömungsrichtung S von 10° entspricht. Basierend auf diesem Zusammenhang ist es bevorzugt, die Flügel 20 in einem Winkelbereich von 10° ≤ α, β ≤ 30°, weiter bevorzugt 12° ≤ α, β ≤ 18°, und am meisten bevorzugt mit einem Winkel von α, β = 15° anzuordnen.

Gemäß einer weiteren bevorzugten Ausführungsform wird die Effizienz des Wärmetauschers auch dadurch verbessert, dass das Flügelrohr mit einer Mehrzahl von Flügeln 24' vorgesehen wird, wie es in Figur 21 veranschaulicht ist. Diese Flügel 24' erstrecken sich ebenfalls in radialer Richtung nach außen. Im Unterschied zu den oben beschriebenen Flügelrohren sind die Flügel 24' aus den Flügelebenen F1, F2 heraus gekrümmt ausgebildet. Sie haben daher in ihrem Querschnitt eine Form, die der Querschnittsform eines Flugzeugflügels ähnelt. In diesem Zusammenhang ist es weiterhin bevorzugt, dass die einander gegenüberliegenden Flügel 24' in unterschiedliche Richtungen gekrümmt ausgebildet sind. Dies ist ebenfalls in Figur 21 beispielgebend dargestellt. Gemäß einer weiteren bevorzugten Ausgestaltung verjüngen sich die Flügel 24' in ihrer Dicke auswärts in radialer Richtung. Mithilfe dieser gekrümmten Flügelgestalt wird der Wärmeaustausch zwischen der Umgebung und dem im Flügelrohr befindlichen Medium unterstützt.

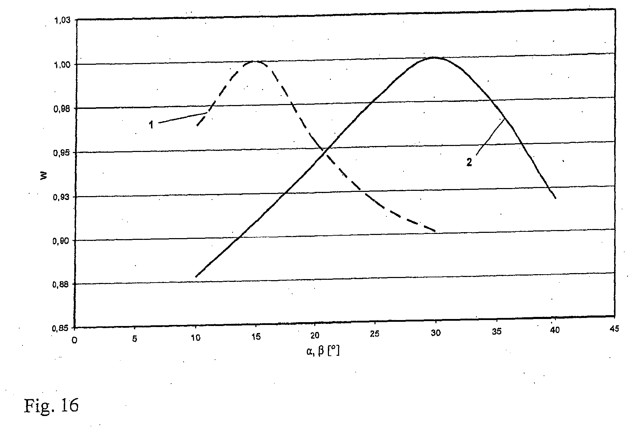

Die Effizienz in der Wärmeabfuhr des Wärmetauschers 1 kann weiterhin durch die Anordnung der Flügelabschnitte 30 innerhalb des Wärmetauschers beeinflusst werden. Gemäß einer bevorzugten Ausführungsform, die auch in Fig. 4 verdeutlicht ist, werden die Flügelabschnitte 30 in Strömungsrichtung S hintereinander angeordnet. Gemäß einer weiteren Ausführungsform vorliegender Erfindung sind die Flügelabschnitte 30 unterschiedlicher serpentinenförmiger Flügelrohre 20a, 20b, 20c, 20d senkrecht zur Strömungsrichtung S versetzt zueinander angeordnet. Mit einem zunehmenden Versatz der Flügelabschnitte 30 unterschiedlicher serpentinenförmiger Flügelrohre 20a, 20b, 20c, 20d zueinander bis hin zu einer mittigen Anordnung eines Flügelabschnitts 30 eines serpentinenförmigen Flügelrohrs 20b bezogen auf zwei benachbarte Flügelabschnitte 30 eines benachbarten serpentinenförmigen Flügelrohrs 20a, 20,c verschiebt sich die maximale Wärmeabfuhr des Wärmetauschers 1 zu größeren Winkeln α, β zwischen Flügel und Strömungsrichtung S (siehe oben). Dieser Zusammenhang ist in Figur 16 veranschaulicht. Figur 16 zeigt als Kurve 1 eine normierte Wärmeabfuhr eines Wärmetauschers 1 mit in Strömungsrichtung S hintereinander angeordneten Flügelabschnitten 30, wie es in Figur 4 gezeigt ist. Die Kurve 2 zeigt die normierte Wärmeabfuhr für einen Wärmetauscher 1, bei dem die Flügelabschnitte 30 eines serpentinenförmigen Flügelrohrs 20b mittig versetzt zu den Flügelabschnitten 30 benachbarter serpentinenförmiger Flügelrohre 20a, 20b angeordnet sind. Der Pfeil in Figur 16 veranschaulicht, wie sich das normierte Maximum der Wärmeabfuhr mit zunehmendem Versatz der Flügelabschnitte 30 zueinander bis maximal zu der oben beschriebenen mittigen Anordnung verschiebt. Sobald der Flügelabschnitt 30 eines serpentinenförmigen Flügelrohrs 20b außermittig bezogen auf die benachbarten Flügelabschnitte 30 eines benachbarten Flügelrohrs 20a, 20c angeordnet ist, stellt sich das normierte Maximum der Wärmeabfuhr zwischen den Maxima der Kurven 1 und 2 ein.

Den Fig. 8 und 11 ist ebenfalls zu entnehmen, dass die flügellosen gebogenen Rohrabschnitte 40a, 40b in jeweils einer Biegeebene B1, B2 angeordnet sind. Die Biegeebenen B1, B2 schließen mit der angrenzenden Rohrebene R1, R2 den gleichen Winkel ein, wie die jeweiligen Flügel 24 des serpentinenförmigen Flügelrohrs 20 und die Strömungsrichtung S. Da die Langlöcher 16 in den Seitenwänden 10 an die Neigung der flügellosen gebogenen Rohrabschnitte 40a, 40b angepasst sind, sind die Langlöcher 16 ebenfalls in diesem Winkel geneigt bezogen auf die Senkrechte zur Strömungsrichtung S angeordnet.

### Bezugszeichenliste

- 1: Wärmetauscher
- 10: Seitenwand
- 11: Frontplatte
- 14: Öffnung
- 16: Langloch
- 20: Flügelrohr, serpentinenförmiges Flügelrohr
- 22-: Rohr
- 24: Flügel
- 24': gekrümmter Flügel
- 25a: Vertiefung an der Rohrinnenseite
- 25b: Steg an der Rohrinnenseite
- 26: U-förmiger Abschnitt
- 30: Flügelabschnitt
- 40: flügelloser Rohrabschnitt
- S: Strömungsrichtung
- W: Wärme
- B1, B2: Biegeebene
- R1, R2: Rohrebene
- F1, F2: Flügelebene

## Patentansprüche

1. Wärmetauscher (1) zum Abführen von Wärme aus einem Medium, der die folgenden Merkmale aufweist:
a. mindestens zwei Außenwände (10), die zwischen sich eine Öffnung (14) definieren, durch die ein Gasstrom in einer Strömungsrichtung (S) leitbar ist,
b. mindestens ein erstes und ein zweites serpentinenförmiges Flügelrohr (20a; 20b; 20c; 20d) bestehend aus einem Rohr (22) und mindestens zwei sich radial davon, gegenüberliegend erstreckenden Flügeln (24), wobei das Flügelrohr (20a; 20b; 20c; 20d) mindestens drei geradlinige Flügelabschnitte (30) verbunden über flügellose gebogene Rohrabschnitte (40) aufweist,
c. die Flügelabschnitte (30) des mindestens ersten und zweiten Flügelrohrs (20a; 20b; 20c; 20d) sind in zwei Rohrebenen (R1; R2) pro Flügelrohr (20a; 20b; 20c; 20d) derart angeordnet, dass benachbarte Flügelabschnitte (30) des ersten Flügelrohrs (20a; 20b; 20c; 20d) und benachbarte Flügelabschnitte (30) des zweiten Flügelrohrs (20a; 20b; 20c; 20d) in unterschiedlichen Rohrebenen (R1; R2) angeordnet sind und dass die Rohrebenen senkrecht zur Strömungsrichtung (S) orientiert ist, wobei
d. die Flügel (24) der Flügelabschnitte (30) zumindest des ersten Flügelrohrs (20a; 20b; 20c; 20d) in mindestens einer Mehrzahl von parallel zueinander angeordneten ersten Flügelebenen (F1; F2) angeordnet sind, die in einem definierten Winkel (a) bezogen auf die Strömungsrichtung (S) im Bereich von 10° ≤ α ≤ 30° angeordnet sind.

2. Wärmetauscher (1) gemäß Anspruch 1, dessen Flügel (24) der Flügelabschnitte (30) des zweiten Flügelrohrs (20a; 20b; 20c; 20d) in mindestens einer Mehrzahl von parallel zueinander angeordneten zweiten Flügelebenen (F1; F2) angeordnet ist, die in einem zweiten definierten Winkel (β) bezogen auf die Strömungsrichtung (S) im Bereich von 10° ≤ β ≤ 30° angeordnet sind.

3. Wärmetauscher (1) gemäß Anspruch 1 oder 2, dessen erster (a) oder dessen erster (a) und zweiter (β) definierter Winkel in einem Bereich von 10° ≤ α, β ≤ 20° liegt.

4. Wärmetauscher (1) gemäß Anspruch 1 oder 2, dessen erster (a) oder dessen erster (a) und zweiter (β) definierter Winkel in einem Bereich von 12° ≤ α, β ≤ 18° oder bei 15° liegt.

5. Wärmetauscher (1) gemäß einem der vorhergehenden Ansprüche, in dem die Flügelabschnitte (30) des mindestens ersten und zweiten Flügelrohrs (20a; 20b; 20c; 20d) in Strömungsrichtung (S) nebeneinander und/oder versetzt zueinander angeordnet sind.

6. Wärmetauscher (1) gemäß einem der vorhergehenden Ansprüche, der mindestens drei oder vier serpentinenförmige Flügelrohre (20a; 20b; 20c; 20d) aufweist, deren Flügelabschnitte (30) jeweils in mindestens einer Rohrebene (R1; R2) pro Flügelrohr (20a; 20b; 20c; 20d) angeordnet sind.

7. Wärmetauscher (1) gemäß einem der vorhergehenden Ansprüche, dessen flügellose gebogene Abschnitte (40) jeweils an einer Seite der serpentinenförmigen Flügelrohre (20a; 20b; 20c; 20d) in einer Mehrzahl von zueinander parallelen Biegeebenen (B1; B2) angeordnet sind, die in einem Winkel zur Rohrebene (R1; R2) des Flügelrohrs (20a; 20b; 20c; 20d) verlaufen, der dem Winkel der Flügelebene (F1; F2) bezogen auf die Strömungsrichtung (S) entspricht.

8. Wärmetauscher (1) gemäß einem der vorhergehenden Ansprüche, dessen mindestens ein serpentinenförmiges Flügelrohr (20a; 20b; 20c; 20d) integrale, vorzugsweise extrudierte, Flügelrohre (20a; 20b; 20c; 20d) aus Aluminium oder einer Aluminiumlegierung sind.

9. Wärmetauscher (1) gemäß einem der vorhergehenden Ansprüche, dessen mindestens ein serpentinenförmiges Flügelrohr (20a; 20b; 20c; 20d) jeweils nur an seinem Anfangs- und Endpunkt mit einer weiteren Leitung oder einem weiteren Flügelrohr (20a; 20b; 20c; 20d) über eine separate Leitung verbunden ist.

10. Wärmetauscher (1) gemäß einem der vorhergehenden Ansprüche, dessen mindestens ein serpentinenförmiges Flügelrohr (20a; 20b; 20c; 20d) an einer Rohrinnenseite eine Mehrzahl von Vertiefungen (25a) aufweist, die eine Oberfläche der Rohrinnenseite des Flügelrohrs (20a', 20b', 20c', 20d) vergrößern.

11. Wärmetauscher (1) gemäß Anspruch 10, in dem die Vertiefungen (25a) an der Rohrinnenseite in Längsrichtung des Flügelrohrs (20a; 20b, 20c, 20d) verlaufen und benachbarte Stege (25b) radial ins Innere des Flügelrohrs (20a; 20b; 20c, 20d) ragen.

12. Wärmetauscher (1) gemäß einem der vorhergehenden Ansprüche, wobei eine Mehrzahl von Flügeln (24') in radialer Richtung verlaufend und aus den Flügelebenen heraus gekrümmt ausgebildet ist.

13. Wärmetauscher (1) gemäß Anspruch 12, wobei die einander gegenüberliegenden Flügel (24') radial auswärts in entgegengesetzten Richtungen gekrümmt sind.

14. Verfahren zur Herstellung eines Wärmetauschers (1) gemäß einem der Ansprüche 1 bis 13, das die folgenden Schritte aufweist:
a. Bereitstellen (H1) eines Gehäuses bestehend aus mindestens zwei einander gegenüberliegenden Seitenwänden (10) mit einer Mehrzahl von, vorzugsweise parallel zueinander angeordneten, Langlöchern (16),
b. Einsetzen (H2) von mindestens zwei serpentinenförmigen Flügelrohren (20a; 20b; 20c; 20d) in die Mehrzahl von Langlöchern (16) der gegenüberliegenden Seitenwände (10) derart, dass eine Mehrzahl von gebogenen flügellosen Rohrabschnitten (40) in die Mehrzahl von Langlöchern (16) eingreift, und
c. Anschließen (H4) von jeweils einer Verbindungsleitung an ein offenes Ende des serpentinenförmigen Flügelrohrs (20a; 20b; 20c; 20d).

15. Verfahren nach Anspruch 14 mit dem weiteren Schritt:
Einsetzen (H2) von drei, vier oder mehr serpentinenförmigen Flügelrohren (20a; 20b; 20c; 20d) in die Mehrzahl von Langlöchern (16) und Verbinden der serpentinenförmigen Flügelrohre (20a; 20b; 20c; 20d) miteinander.

16. Verfahren nach einem der Ansprüche 14-15, wobei das Flügelrohr (20a; 20b; 20c; 20d) mit Vertiefungen an einer Rohrinnenseite und/oder mit gekrümmten Flügeln (24') bereitgestellt wird.

17. Klimaanlage mit einem Wärmetauscher (1) gemäß einem der Ansprüche 1-13.

18. Kühlanlage mit einem Wärmetauscher (1) gemäß einem der Ansprüche 1-13.

19. Solarthermieanlage mit einem Wärmetauscher (1) gemäß einem der Ansprüche 1-13.

20. Trockner mit einem Wärmetauscher (1) gemäß einem der Ansprüche 1-13, insbesondere ein Trockner mit einem Wärmepumpensystem.

21. Verwendung des Wärmetauschers (1) gemäß einem der Ansprüche 1-13 als Verflüssiger und/oder Verdampfer.

## Claims

1. Heat exchanger (1) for removing heat from a medium, which comprises the following features:
a. at least two outer walls (10) defining an opening therebetween by means of which a gas flow is directable into a flow direction (S),
b. at least a first and a second serpentine-shaped wing tube (20a; 20b; 20c; 20d), consisting of a tube (22) and at least two opposite wings (24), which protrude radially therefrom, wherein the wing tube (20a; 20b; 20c; 20d) has at least three linear wing sections (30) coupled via wingless curved tube sections (40),
c. the wing sections (30) of the at least first and second wing tube (20a; 20b; 20c; 20d) are arranged in two tube planes (R1; R2) per wing tube (20a; 20b; 20c; 20d) so that adjacent wing sections (30) of the first wing tube (20a; 20b; 20c; 20d) and adjacent wing sections (30) of the second wing tube (20a; 20b; 20c; 20d) are arranged in different tube planes (R1; R2) and that the tube planes are orientated perpendicular to the flow direction (S),
d. the wings (24) of the wing sections (30) of the at least first wing tube (20a; 20b; 20c; 20d) are arranged in at least a plurality of first wing planes (F1; F2) arranged parallel to each other, which are arranged in a defined angle (a) in the range of 10° ≤ α ≤ 30° with respect to the flow direction (S).

2. Heat exchanger (1) according to claim 1, wherein its wing (24) of the wing sections (30) of the second wing tube (20a; 20b; 20c; 20d) is arranged in at least a plurality of second wing planes (F1; F2) arranged parallel to each other, which are arranged in a defined angle (β) in the range of 10° ≤ β ≤ 30° with respect to the flow direction (S).

3. Heat exchanger according to claim 1 or 2, the first (a) or the first (a) and the second (β) defined angle of which is in the range of 10° ≤ α, β ≤ 20°.

4. Heat exchanger according to claim 1 or 2, the first (α) or the first (α) and the second (β) defined angle are in the range of 12° ≤ α, β ≤ 18° or at 15°.

5. Heat exchanger (1) according to one of the preceding claims, in which the wing sections (30) of the at least first and second wing tubes (20a; 20b; 20c; 20d) are arranged in flow direction (S) next to each other and/or displaced with respect to each other.

6. Heat exchanger (1) according to one of the preceding claims, comprising at least three or four serpentine-shaped wing tubes (20a; 20b; 20c; 20d), the wing sections (30) of which are arranged in at least one tube plane (R1; R2) per wing tube (20a; 20b; 20c; 20d), respectively.

7. Heat exchanger (1) according to one of the preceding claims, the wingless curved sections (40) of which are arranged at one side of the serpentine-shaped wing tubes (20a; 20b; 20c; 20d) in a plurality of bending planes (B1; B2) which are parallel to each other and which extend in an angle with respect to the tube plane (R1; R2) of the wing tube (20a; 20b; 20c; 20d), which corresponds to the angle of the wing plane (F1; F2) with respect to the flow direction (S).

8. Heat exchanger (1) according to one of the preceding claims, the at least one serpentine-shaped wing tube (20a; 20b; 20c; 20d) are integral, preferably extruded, wing tubes (20a; 20b; 20c; 20d) from aluminum or an aluminum alloy.

9. Heat exchanger (1) according to one of the preceding claims, the at least one serpentine-shaped wing tube (20a; 20b; 20c; 20d) of which is each coupled only at its starting and end point to a further conduit or a further wing tube (20a; 20b; 20c; 20d) via a separate conduit.

10. Heat exchanger (1) according to one of the preceding claims, the at least one serpentine-shaped wing tube (20a; 20b; 20c; 20d) of which has a plurality of recesses (25a) at an inner side of the tube which enlarge the surface of the inner side of the tube of the wing tube (20a', 20b', 20c', 20d).

11. Heat exchanger (1) according to claim 10, in which the recesses (25a) on the inner side extend in longitudinal direction of the wing tube (20a; 20b; 20c; 20d) and adjacent webs (25b) protrude radially into the interior of the wing tube (20a; 20b; 20c; 20d).

12. Heat exchanger (1) according to one of the preceding claims, wherein a plurality of wings (24') is formed extending in radial direction and curved out of the wing planes.

13. Heat exchanger (1) according to claim 12, wherein the wings (24') arranged oppositely to each other are curved radially outwardly in opposite directions.

14. Method for producing a heat exchanger (1) according to one of the claims 1 to 13, comprising the following steps:
a. providing (H1) a housing consisting of at least two opposite side walls (10) having a plurality of elongated holes (16), preferably arranged parallel to each other,
b. inserting (H2) of at least two serpentine-shaped wing tubes (20a; 20b; 20c; 20d) into the plurality of elongated holes (16) of the opposite side walls (10) so that a plurality of curved wingless tube sections (40) is in engagement with the plurality of elongated holes (16), and
c. coupling (H4) of a coupling conduit to an open end of the serpentine-shaped wing tube (20a; 20b; 20c; 20d).

15. Method according to claim 14, comprising the further step:
inserting (H2) of three, four or more serpentine-shaped wing tubes (20a; 20b; 20c; 20d) in the plurality of elongated holes (16) and coupling the serpentine-shaped wing tubes (20a; 20b; 20c; 20d) to each other.

16. Method according to one of the claims 14 to 15, wherein the wing tube (20a; 20b; 20c; 20d) is provided with recesses on the inner side of the tube and/or with curved wings (24').

17. Air conditioner having a heat exchanger (1) according to one of the claims 1 to 13.

18. Cooling device having a heat exchanger (1) according to one of the claims 1 to 13.

19. Solar heat device having a heat exchanger (1) according to one of the claims 1 to 13.

20. Dryer having a heat exchanger (1) according to one of the claims 1 to 13, particularly a dryer having a heat pump system.

21. Usage of the heat exchanger (1) according to one of the claims 1 to 13 as condenser and/or evaporator.

## Revendications

1. Echangeur de chaleur (1) pour l'évacuation de chaleur d'un milieu qui présente les caractéristiques suivantes :
a. au moins deux parois externes (10) qui définissent une ouverture (14) entre elles à travers laquelle un courant gazeux peut être dirigé dans une direction d'écoulement (S),
b. au moins un premier et un second tube à ailettes en forme de serpentin (20a ; 20b ; 20c ; 20d) constitué d'un tube (22) et d'au moins deux ailettes (24) s'étendant à l'opposé, radialement depuis celui-ci, dans lequel le tube à ailettes (20a ; 20b ; 20c ; 20d) présente au moins trois sections d'ailette linéaires (30) connectées par le biais de sections de tube courbées sans ailette (40),
c. les sections d'ailette (30) de l'au moins premier et second tube à ailettes (20a ; 20b ; 20c ; 20d) sont disposées dans deux plans de tube (R1 ; R2) par tube à ailettes (20a ; 20b ; 20c ; 20d) de telle sorte que des sections d'ailette voisines (30) du premier tube à ailettes (20a ; 20b ; 20c ; 20d) et des sections d'ailette voisines (30) du second tube à ailettes (20a ; 20b ; 20c ; 20d) sont disposées dans différents plans de tube (R1 ; R2), et que les plans de tube sont orientés perpendiculairement à la direction d'écoulement (S), dans lequel
d. les ailettes (24) des sections d'ailette (30) au moins du premier tube à ailettes (20a ; 20b ; 20c ; 20d) sont disposées dans au moins une pluralité de premiers plans d'ailette (F1 ; F2) disposés parallèlement les uns aux autres qui sont disposés à un angle défini (a) par rapport à la direction d'écoulement (S) dans la plage de 10° ≤ α ≤ 30°.

2. Echangeur de chaleur (1) selon la revendication 1, dont l'ailette (24) des sections d'ailette (30) du second tube à ailettes (20a ; 20b ; 20c ; 20d) est disposée dans au moins une pluralité de seconds plans d'ailette (F1 ; F2) disposés parallèlement les uns aux autres qui sont disposés à un second angle défini (β) par rapport à la direction d'écoulement (S) dans la plage de 10° ≤ β ≤ 30°.

3. Echangeur de chaleur (1) selon la revendication 1 ou 2, dont le premier (a) ou dont le premier (α) et le second (β) angles définis se situent dans une plage de 10° ≤ α, β ≤ 20°.

4. Echangeur de chaleur (1) selon la revendication 1 ou 2, dont le premier (α) ou dont le premier (a) et le second (β) angles définis se situent dans une plage de 12° ≤ α, β ≤ 18° ou à 15°.

5. Echangeur de chaleur (1) selon une des revendications précédentes, dans lequel les sections d'ailette (30) de l'au moins premier et second tube à ailettes (20a ; 20b ; 20c ; 20d) sont disposées de manière juxtaposée et/ou décalée les unes des autres dans la direction d'écoulement (S).

6. Echangeur de chaleur (1) selon une des revendications précédentes, qui présente au moins trois ou quatre tubes à ailettes en forme de serpentin (20a ; 20b ; 20c ; 20d) dont les sections d'ailette (30) sont chacune disposées dans au moins un plan de tube (R1 ; R2) par tube à ailettes (20a ; 20b ; 20c ; 20d).

7. Echangeur de chaleur (1) selon une des revendications précédentes, dont les sections courbées sans ailette (40) sont chacune disposées sur un côté des tubes à ailettes en forme de serpentin (20a ; 20b ; 20c ; 20d) dans une pluralité de plans de courbure parallèles les uns aux autres (B1 ; B2) qui s'étendent à un angle par rapport au plan de tube (R1 ; R2) du tube à ailettes (20a ; 20b ; 20c ; 20d) qui correspond à l'angle du plan d'ailette (F1 ; F2) par rapport à la direction d'écoulement (S).

8. Echangeur de chaleur (1) selon une des revendications précédentes, dont au moins un tube à ailettes en forme de serpentin (20a ; 20b ; 20c ; 20d) est des tubes à ailettes intégraux, de préférence extrudés (20a ; 20b ; 20c ; 20d) en aluminium ou un alliage d'aluminium.

9. Echangeur de chaleur (1) selon une des revendications précédentes, dont au moins un tube à ailettes en forme de serpentin (20a ; 20b ; 20c ; 20d) est connecté à chaque fois uniquement à son point de départ et d'extrémité à une autre conduite ou un autre tube à ailettes (20a ; 20b ; 20c ; 20d) par le biais d'une conduite séparée.

10. Echangeur de chaleur (1) selon une des revendications précédentes, dont au moins un tube à ailettes en forme de serpentin (20a ; 20b ; 20c ; 20d) présente sur un côté interne de tube une pluralité de renfoncements (25a) qui agrandissent une surface du côté interne de tube du tube à ailettes (20a' ; 20b' ; 20c' ; 20d).

11. Echangeur de chaleur (1) selon la revendication 10, dans lequel les renfoncements (25a) sur le côté interne de tube s'étendent dans la direction longitudinale du tube à ailettes (20a ; 20b ; 20c ; 20d) et des entretoises voisines (25b) dépassent radialement dans l'intérieur du tube à ailettes (20a ; 20b ; 20c ; 20d).

12. Echangeur de chaleur (1) selon une des revendications précédentes, dans lequel une pluralité d'ailettes (24') est réalisée en s'étendant dans la direction radiale et de manière incurvée en partant des plans d'ailette.

13. Echangeur de chaleur (1) selon la revendication 12, dans lequel les ailettes opposées les unes aux autres (24') sont incurvées radialement vers l'extérieur dans des directions opposées.

14. Procédé de fabrication d'un échangeur de chaleur (1) selon une des revendications 1 à 13, qui présente les étapes suivantes :
a. mise à disposition (H1) d'un logement constitué d'au moins deux parois latérales opposées l'une à l'autre (10) avec une pluralité de trous oblongs (16) disposés de préférence parallèlement les uns aux autres,
b. insertion (H2) d'au moins deux tubes à ailettes en forme de serpentin (20a ; 20b ; 20c ; 20d) dans la pluralité de trous oblongs (16) des parois latérales opposées (10) de telle sorte qu'une pluralité de sections de tube courbées sans ailette (40) s'engrène dans la pluralité de trous oblongs (16), et
c. raccord (H4) à chaque fois d'une conduite de connexion à une extrémité ouverte du tube à ailettes en forme de serpentin (20a ; 20b ; 20c ; 20d).

15. Procédé selon la revendication 14 avec l'étape supplémentaire :
insertion (H2) de trois, quatre ou plus tubes à ailettes en forme de serpentin (20a ; 20b ; 20c ; 20d) dans la pluralité de trous oblongs (16) et connexion des tubes à ailettes en forme de serpentin (20a ; 20b ; 20c ; 20d) les uns aux autres.

16. Procédé selon une des revendications 14 et 15, dans lequel le tube à ailettes (20a ; 20b ; 20c ; 20d) est mis à disposition avec des renfoncements sur un côté interne de tube et/ou avec des ailettes incurvées (24').

17. Climatiseur avec un échangeur de chaleur (1) selon une des revendications 1 à 13.

18. Installation réfrigérante avec un échangeur de chaleur (1) selon une des revendications 1 à 13.

19. Installation solaire avec un échangeur de chaleur (1) selon une des revendications 1 à 13.

20. Séchoir avec un échangeur de chaleur (1) selon une des revendications 1 à 13, notamment séchoir avec un système de pompe à chaleur.

21. Utilisation de l'échangeur de chaleur (1) selon une des revendications 1 à 13 en tant que liquéfacteur et/ou évaporateur.
